# EUROPÄISCHE PATENTSCHRIFT

(11) **EP 4 256 095 B1**
(45) Veröffentlichungstag und Bekanntmachung des Hinweises auf die Patenterteilung: **28.10.2026**
(21) Anmeldenummer: 21823840.0
(22) Anmeldetag: 30.11.2021
(51) Int. Cl.: C22B 5/12, C22B 7/04, F27B 1/20, F27D 3/16, C21C 5/46

(54) **VERFAHREN ZUM PYROMETALLURGISCHEN EINSCHMELZEN VON METALLHALTIGEN ROHSTOFFEN, RESTSTOFFEN UND/ODER SEKUNDÄRRESTSTOFFEN**
METHOD FOR THE PYROMETALLURGICAL SMELTING OF METAL-CONTAINING RAW MATERIALS, WASTE MATERIALS AND/OR SECONDARY WASTE MATERIALS
PROCÉDÉ DE FUSION PYROMÉTALLURGIQUE DE MATIÈRES PREMIÈRES, DÉCHETS ET/OU DÉCHETS SECONDAIRES CONTENANT DU MÉTAL

(30) Priorität: 01.12.2020 DE 102020215147
(43) Veröffentlichungstag der Anmeldung: 11.10.2023
(73) Patentinhaber: SMS group GmbH, 41069 Mönchengladbach (DE)
(72) Erfinder: KAUSSEN, Frank, Marlin, 52066 Aachen (DE); BOROWSKI, Nikolaus Peter Kurt, 40489 Düsseldorf (DE); REUTER, Markus Andreas, 40629 Düsseldorf (DE); GEIMER, Stephan, 45478 Mühlheim (DE); LUX, Timm, 40668 Meerbusch (DE); DEGEL, Rolf, 40880 Ratingen (DE)
(74) Vertreter: Hemmerich & Kollegen
(86) Internationale Anmeldenummer: PCT/EP2021/083636
(87) Internationale Veröffentlichungsnummer: WO 2022/117585

(56) Entgegenhaltungen:
- TW-A- 201 326 408
- US-A1- 2001 043 639
- US-A1- 2003 000 338
- US-B1- 6 558 614

## Beschreibung

Die vorliegende Erfindung betrifft ein Verfahren zum pyrometallurgischen Einschmelzen von metallhaltigen Rohstoffen, Reststoffen und/oder Sekundärreststoffen in Anwesenheit eines oxidierenden, reduzierenden und/oder inerten Gases.

Aus dem Stand der Technik sind Verfahren zum pyrometallurgischen Einschmelzen von metallhaltigen Rohstoffen, Reststoffen und/oder Sekundärreststoffen grundsätzlich bekannt.

Die hierin eingesetzten metallhaltigen Rohstoffe, Reststoffe und/oder Sekundärreststoffe weisen in der Regel einen merklichen Anteil an Kohlenwasserstoffen auf, der durch den hohen Energiegehalt eine intensive Kühlung des Einschmelzprozesses erfordert.

Um die stark exothermen Prozesse zu kühlen sind aus dem Stand der Technik Einschmelzaggregate mit kühlbaren Reaktorwänden bekannt. So offenbart beispielsweise die chinesische Patentanmeldung CN 104928493 A ein Verfahren zur Rückgewinnung von Metallen aus Sekundärstoffen mittels eines Schmelzreaktors. Dieser weist eine kreisrunde Kammer auf, die von einer kühlbaren Reaktorwand begrenzt ist. In der Reaktorwand sind mehrere Sauerstofflanzen unterhalb einer Schlackenöffnung, in einem Winkel von 5° - 60° zur Horizontalen sowie mit einem Offset zum Zentrum der Kammer angeordnet, so dass der Sauerstoff direkt in die Schmelze injizierbar ist und die Schmelze innerhalb der kreisrunden Kammer in eine Rotation gebracht werden kann.

Die Patentdokumente US 6 558 614 B1, TW 201 326 408 A, US 2003/000338 A1 und US 2001/043639 A1 offenbaren außerdem ein Verfahren zum pyrometallurgischen Einschmelzen von metallhaltigen Rohstoffen.

Die aus dem Stand der Technik bekannten externen Kühlmaßnahmen sind jedoch aufgrund einer merklichen Hysterese schwer regelbar und technisch sehr aufwendig.

Der vorliegenden Erfindung liegt daher die Aufgabe zu Grunde ein Verfahren bereitzustellen, das eine bessere Regulierung von stark exothermen Prozessen beim pyrometallurgischen Einschmelzen von metallhaltigen Rohstoffen, Reststoffen und/oder Sekundärreststoffen in Anwesenheit eines oxidierenden, reduzierenden und/oder inerten Gases ermöglicht.

Erfindungsgemäß wird die Aufgabe durch ein Verfahren mit den Merkmalen des Patentanspruchs 1 gelöst.

Gemäß dem erfindungsgemäßen Verfahren zum pyrometallurgischen Einschmelzen von metallhaltigen Rohstoffen, Reststoffen und/oder Sekundärreststoffen werden diese in zerkleinerter Form einem Einschmelzaggregat, das eine Schmelzzone, eine Haupt- sowie eine Nebenreaktionszone umfasst, zugeführt und in Gegenwart eines oxidierenden, reduzierenden und/oder inerten Gases und/oder Gasgemisches eingeschmolzen, so dass eine flüssige Schmelzphase, eine flüssige Schlackenphase sowie eine Gasphase gebildet wird.

Das Verfahren ist dadurch gekennzeichnet, dass das oxidierende, reduzierende und/oder inerte Gas und/oder Gasgemisch über zumindest einen Injektor komprimiert zugeführt und innerhalb des Einschmelzaggregats adiabatisch expandiert und sodann als adiabatisch expandiertes Gas und/oder Gasgemisch in die flüssige Schlackenphase eingeblasen wird, vorzugsweise derart, dass eine Kühlwirkung von mindestens 10 J/Nm³ erzielt wird.

Durch die adiabatische Expansion des oxidierenden, reduzierenden und/oder inerten Gases und/oder Gasgemisches bzw. Reaktionsgases, tritt eine direkte Kühlwirkung im inneren des Einschmelzaggregats ein, über die sich der Energie-/Wärmehaushalt des Prozesses gezielt steuern lässt. So kann über die Einstellung des Druckes, der Strömung und/oder der Düsengeometrie des Injektors, der vorzugsweise eine Lavaldüse umfasst, die adiabatische Expansion des Reaktionsgases derart eingestellt werden, dass eine Kühlwirkung von mindestens 10 J/Nm³, mehr bevorzugt eine Kühlwirkung von mindestens 100 J/Nm³, noch mehr bevorzugt eine Kühlwirkung von mindestens 1.0 kJ/Nm³, und am meisten bevorzugt eine Kühlwirkung von mindestens 5.0 kJ/Nm³ erzielbar ist.

Hinsichtlich der Leistungswerte wird darauf hingewiesen, dass es sich hierbei um eine Leistungsangabe handelt, die auf einen Normkubikmeter (Nm³) gemäß DIN1343:1990-01 bezogen ist.

Der maximale Wert der erzielbaren Kühlwirkung ist physikalisch grundsätzlich durch den Joule-Thompson-Effekt beschränkt. Daher kann über die Einstellung des Druckes, der Strömung und/oder der Düsengeometrie des Injektors, der vorzugsweise die Lavaldüse umfasst, die adiabatische Expansion des Reaktionsgases derart eingestellt werden, dass eine Kühlwirkung von maximal 100 KJ/Nm³, mehr bevorzugt eine Kühlwirkung von maximal 90 kJ/Nm³, noch mehr bevorzugt eine Kühlwirkung von maximal 80 kJ/Nm³, und am meisten bevorzugt eine Kühlwirkung von maximal 70 kJ/Nm³ erzielbar ist.

Es ist darauf hinzuweisen, dass die vorliegend angegebene Kühlwirkung nur mit solchen Gasen und/oder Gasgemischen erzielbar ist, die einen positiven Joule-Thompson-Koeffizienten µ aufweisen.

Durch die direkte Kühlung im inneren des Einschmelzaggregats mittels des Reaktionsgases, welches somit auch als Kühlmedium verwendet wird, können die externen Kühlmaßnahmen, die üblicherweise durch den Einsatz von Kühlpanels und/oder Kühlkanälen durchgeführt werden, vorteilhafterweise erweitert werden, was das gesamte Kühlmanagement wesentlich vereinfacht und verbessert. Ferner können durch die direkte Kühlung die Standzeiten der Feuerfestauskleidung der Einschmelzaggregate verlängert werden, was sich vorteilhaft auf die Betriebswirtschaftlichkeit der Einschmelzaggregate auswirkt.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Grundsätzlich kann das über den zumindest einen Injektor eingeblasene Reaktionsgas direkt in die flüssige Schlackenphase zugegeben werden, indem der Injektor in die flüssige Schmelzphase eingetaucht wird.

Bevorzugt ist jedoch vorgesehen, dass das Reaktionsgas über zumindest einen in dem Einschmelzaggregat oberhalb der flüssigen Schlackenphase und berührungslos zu dieser angeordneten sowie in einem Winkel von 5° bis 85°, mehr bevorzugt in einem Winkel von 15° bis 80°, noch mehr bevorzugt in einem Winkel von 25° bis 75°, und am meisten bevorzugt in einem Winkel von 35° bis 70°, bezogen auf die Horizontale ausgerichteten Injektor in die flüssige Schlackenphase eingeblasen wird, so dass das Reaktionsgas innerhalb einer Haupt- und/oder Nebenreaktionszone des Einschmelzaggregats adiabatisch expandiert wird.

Durch eine derartige Injektion des Reaktionsgases wird die flüssige Schlackenphase in eine starke Turbulenz versetzt, derart, dass diese in die oberhalb der flüssigen Schmelzphase angeordnete und in der Nebenreaktionszone befindliche Gasphase verspritzt. Überraschenderweise hat sich dabei gezeigt, dass hierdurch eine mindestens um den Faktor 5, bevorzugt mindestens eine um den Faktor 6, mehr bevorzugt mindestens eine um den Faktor 7, und am meisten bevorzugt eine mindestens um den Faktor 8 größere Oberfläche im Vergleich zu der flüssigen Schmelzphase im Prozess erreicht wird, die zu einem besonders intensiven Kontakt sowie einem erhöhtem Massen- und Energieübergang mit der oberhalb der flüssigen Schmelzphase angeordneten und in der Nebenreaktionszone befindlichen Gasphase führt. Durch die Anordnung des zumindest einen Injektors in einem spezifischen Winkel zur Horizontalen wird die flüssige Schlackenphase zudem in Rotation versetzt, so dass sich ein Vortex innerhalb der Haupt- als auch der Nebenreaktionszone ausbildet, der die Turbulenz zusätzlich unterstützt. So kann eine maximal turbulente Umgebung innerhalb des Einschmelzaggregats geschaffen werden, die für eine besonders effektive metallurgische Reaktion sorgt. Durch die adiabatische Expansion des Reaktionsgases innerhalb der flüssigen Schlackenphase kann die Ausbildung der großen spezifischen Oberfläche dieser nochmals erhöht werden, die letztendlich zu dem besonders intensiven Kontakt mit der umgebenden Gasatmosphäre führt und die chemischen Reaktionen als auch deren Umsetzungsgrad erhöht.

Unter dem Begriff "berührungslos" wird im Sinne der vorliegenden Erfindung verstanden, dass der zumindest eine Injektor, über den das oxidierende, reduzierende und/oder inerte Gas und/oder Gasgemisch in das Einschmelzaggregat injizierbar ist, sowohl während des Einblasens als auch in den Prozessschritten dazwischen, sich in keinem kontinuierlichen Kontakt mit der flüssigen Schlackenphase befindet, sondern in einem spezifischen Abstand hierzu und somit während des gesamten Prozesses oberhalb des Badstandes positioniert ist. Hiervon ausgenommen ist ein temporärer Kontakt einzelner Tropfen der flüssigen Schlackenphase und/oder der flüssigen Schmelzphase, der im Laufe des Prozesses in Abhängigkeit der starken Turbulenzen vorkommen und somit nicht verhindert werden kann.

Unter dem Begriff "Injektor" wird im Sinne der vorliegenden Erfindung, sofern nicht anders definiert, eine Lanze oder ein Einspritzrohr verstanden, das im Wesentlichen aus einem hohlzylinderförmigen Element gebildet ist.

Unter dem Begriff "Einschmelzaggregat" wird im Sinne der vorliegenden Erfindung ein konventionelles Badschmelzaggregat verstanden, das einen auf einer runden oder eckigen Grundfläche stehenden Hohlzylinder, Hohlkegel oder Hohlquader umfasst, wobei die Höhe des Hohlzylinders, Hohlkegels oder Hohlquaders ein Vielfaches seiner Länge und Breite aufweist. Vorzugsweise ist daher vorgesehen, dass die oberhalb der Schmelzzone angeordnete Hauptreaktionszone des Einschmelzaggregats einen im Wesentlichen kreisrunden und/oder ovalförmig ausgebildeten Querschnitt aufweist.

Weitere dem Fachmann aus dem Stand der Technik bekannte Einschmelzaggregate, wie beispielsweise Elektrolichtbogenöfen (EAF), Submerged Arc Furnaces (SAF) oder Induktionsöfen (IF) sind von der vorliegenden Erfindung nicht mitumfasst.

Vorteilhafterweise ist vorgesehen, dass der zumindest eine Injektor, über den das Reaktionsgas berührungslos in die flüssige Schlackenphase eingeblasen wird, einen Mindestabstand von 0.10 m, bevorzugt einen Mindestabstand von 0.15 m, mehr bevorzugt einen Mindestabstand von 0.20 m, noch mehr bevorzugt einen Mindestabstand von 0.25 m, und am meisten bevorzugt einen Mindestabstand von 0.30 m zur Oberfläche der flüssigen Schlackenphase aufweist, bezogen auf die Injektorspitze. Neben der bereits erläuterten Rührwirkung und der turbulenten Durchmischung der flüssigen Schlackenphase mit der benachbarten Gasphase, die zu einer besonders effektiven metallurgischen Reaktion führt, ergibt sich durch die zur flüssigen Schlackenphase beabstandete Anordnung zudem eine signifikante Verschleißreduzierung des Injektors. Auch ein Zusetzen des Injektors, der bei dem aus dem Stand der Technik bekannten Lösungen einen sehr hohen und kostenintensiven Wartungsaufwand erfordert, wird hierdurch wirkungsvoll verhindert.

Allerdings sollte der zumindest eine Injektor, über den das Reaktionsgas berührungslos in die flüssige Schlackenphase eingeblasen wird, einen Maximalabstand zur Oberfläche der flüssigen Schlackenphase nicht überschreiten. Daher ist vorteilhafterweise vorgesehen, dass der zumindest eine Injektor einen Maximalabstand von 2.50 m, bevorzugt einen Maximalabstand von 2.0 m, mehr bevorzugt einen Maximalabstand von 1.50 m, noch mehr bevorzugt einen Maximalabstand von 1.0 m, und am meisten bevorzugt einen Maximalabstand von 0.80 m zur Oberfläche der flüssigen Schlackenphase aufweist, bezogen auf die Injektorspitze.

**In** diesem Zusammenhang wird angemerkt, dass der Badstand der flüssigen Schlackenphase während des gesamten Prozesses keinen statischen Badstand bzw. Schlackenspiegel aufweist, sondern dieser vielmehr aufgrund der unterschiedlichen Prozessphasen variieren kann. Besonders bevorzugt ist daher vorgesehen, dass der zumindest eine Injektor, über den das Reaktionsgas berührungslos in die flüssige Schlackenphase eingeblasen wird, derart in dem Einschmelzaggregat positioniert ist, dass ein Abstand im Bereich von 0.30 m bis 2.0 m, ganz besonders bevorzugt einen Abstand im Bereich von 0.50 m bis 1.70 m zur Oberfläche der flüssigen Schlackenphase gewährleistet wird.

Vorzugsweise wird das Reaktionsgas derart in die flüssige Schlackenphase eingeblasen, dass es in diese mit einer Mindesttiefe von 1/4, bevorzugt mit einer Mindesttiefe von 1/3, mehr bevorzugt mit einer Mindesttiefe von 2/4, noch mehr bevorzugt mit einer Mindesttiefe von 2/3, und am meisten bevorzugt mit einer Mindesttiefe von 3/4, eindringt. Durch spezifische Einstellung der Geschwindigkeit sowie des Gasstromimpulses des injizierten Reaktionsgases ist die Eindringtiefe einstellbar, so dass bei Bedarf und abhängig der beiden Parameter auch ein Eindringen bis in die flüssige Schmelzphase erreicht werden kann. Somit kann im Bedarfsfall auch die unterhalb der flüssigen Schlackenphase angeordnete metallhaltige Schmelzphase manipuliert werden. Zudem können durch den Gasstrahl Kavitationen in der flüssigen Schlackenphase kurzzeitig aufgerissen werden, in die die metallhaltigen Rohstoffe, Reststoffe und/oder Sekundärreststoffe sodann hineingerissen und innerhalb der Schlackenphase besser zersetzt werden.

In einer vorteilhaften Ausführungsvariante kann das über den zumindest einen Injektor in die Schlackenphase eingeblasene Reaktionsgas mit einer Geschwindigkeit von mindestens 50 m/s, bevorzugt mit einer Geschwindigkeit von mindestens 100 m/s, mehr bevorzugt mit einer Geschwindigkeit von mindestens 150 m/s, noch mehr bevorzugt mit einer Geschwindigkeit von mindestens 200 m/s, weiter bevorzugt mit einer Geschwindigkeit von mindestens 250 m/s, und am meisten bevorzugt mit einer Geschwindigkeit von mindestens 300 m/s, eingeblasen werden, wobei es sich bei den vorliegend genannten Geschwindigkeitswerten um Austrittsgeschwindigkeiten handelt, die das jeweilige Gas beim Austritt aus dem Injektor, also an seiner Spitze, aufweist.

Hinsichtlich der maxiamlen Geschwindigkeit ist vorzugsweise vorgesehen, dass das Reaktionsgas mit einer Geschwindigkeit von maximal 1000 m/s, mehr bevorzugt mit einer Geschwindigkeit von maximal 800 m/s, noch mehr bevorzugt mit einer Geschwindigkeit von maximal 600 m/s, weiter bevorzugt mit einer Geschwindigkeit von maximal 550 m/s, und am meisten bevorzugt mit einer Geschwindigkeit von maximal 450 m/s in die flüssige Schlackenphase eingeblasen wird.

In diesem Zusammenhang ist besonders bevorzugt vorgesehen, dass der zumindest eine Injektor eine Lavaldüse umfasst, über die das Reaktionsgas in die flüssige Schlackenphase eingeblasen wird. Eine Lavaldüse kennzeichnet sich dadurch, dass diese einen konvergenten und einen divergenten Abschnitt umfasst, welche an einer Düsenkehle einander angrenzen. Der Radius im engsten Querschnitt, der Austrittsradius als auch die Düsenlänge kann in Abhängigkeit des jeweiligen Auslegungsfalls unterschiedlich sein.

In einer weiteren vorteilhaften Ausführungsvariante weist die Lavaldüse zusätzlich eine Koaxialdüse bzw. eine Ringspaltdüse auf, über die ein zweites oxidierendes, reduzierendes und/oder inertes Gas- und/oder Gasgemisch auf die Schlackenphase aufgeblasen werden kann. Während mittels des Injektors, vorzugsweise umfassend eine überschallfähige Lavaldüse, das erste oxidierende, reduzierende und/oder inerte Gas- und/oder Gasgemisch in die flüssige Schlackenphase derart eingeblasen wird, dass es diese penetriert, wird das zweite oxidierende, reduzierende und/oder inerte Gas- und/oder Gasgemisch über die Ringspaltdüse auf die Schlackenphase lediglich aufgeblasen und penetriert diese nicht. Das zweite oxidierende, reduzierende und/oder inerte Gas- und/oder Gasgemisch wird daher im Sinne der vorliegenden Erfindung als "Hüllgas" bezeichnet.

Das erste und/oder das zweite oxidierende Gas und/oder Gasgemisch ist vorzugsweise ausgewählt aus der Reihe umfassend Sauerstoff, Luft und/oder sauerstoffangereicherte Luft. Das erste und/oder das zweite reduzierende Gas und/oder Gasgemisch ist vorzugsweise ausgewählt aus der Reihe umfassend Erdgas, insbesondere Methan, Kohlenmonoxid, Wasserdampf, Wasserstoff, insbesondere grüner Wasserstoff, und/oder Gasmischungen hiervon. Das erste und/oder das zweite inerte Gas und/oder Gasgemisch ist vorzugsweise ausgewählt aus der Reihe umfassend Stickstoff, Argon, Kohlendioxid und/oder Gasmischungen hiervon.

Unter dem Begriff grüner Wasserstoff wird im Sinne der vorliegenden Erfindung verstanden, dass dieser elektrolytisch durch die Aufspaltung von Wasser in Sauerstoff und Wasserstoff hergestellt worden ist, wobei der für die Elektrolyse erforderliche Strom aus erneuerbaren Energien, wie Wind, Wasserkraft und/oder Sonne, stammt.

Die Möglichkeit, neben dem Reaktionsgas, zusätzlich ein reaktives und/oder ein inertes Hüllgas und/oder ein Hüllgasgemisch in das Einschmelzaggregat einzuführen erlaubt vorteilhafterweise eine Steuerung des chemischen Potentials sowie eine Regelung des Sauerstoff-Partialdrucks in der flüssigen Schlackenphase sowie der Gasphase. Das chemische Potential der Gasphase wird dabei durch das in der Reaktion aus den einzuschmelzenden metallhaltigen Rohstoffen, Reststoffen und/oder Sekundärreststoffen, des über den Injektor eingebrachten Reaktionsgases, der daraus resultierenden Reaktionsgasblasen in der flüssigen Schmelz- und Schlackenphase sowie des zugeführten Hüllgases gebildet.

In einer bevorzugten Ausführungsvariante kann die Zusammensetzung des Reaktionsgases, das in die flüssige Schlackenphase eingeblasen wird, konstant gehalten werden, während die Zusammensetzung des Hüllgases in Abhängigkeit der Erfordernisse zur optimalen Steuerung des chemischen Potentials der Gasatmosphäre gezielt verändert werden kann.

Ergänzend und/oder alternativ kann in einer weiteren bevorzugten Ausführungsvariante die Zusammensetzung des Hüllgases, das auf die Schlackenphase aufgeblasen wird, konstant gehalten werden, während die Zusammensetzung des in die flüssige Schlackenphase zugeführten Reaktionsgases oder Reaktionsgasgemisches in Abhängigkeit der Erfordernisse zur optimalen Steuerung des chemischen Potentials gezielt verändert werden kann.

Bevorzugte Flussraten, mit denen das Reaktionsgas in die flüssige Schlackenphase eingeblasen wird, betragen mindestens 300 Nm³/h, bevorzugt mindestens 350 Nm³/h, mehr bevorzugt mindestens 400 Nm³/h, noch mehr bevorzugt mindestens 450 Nm³/h und am meisten bevorzugt mindestens 500 Nm³/h. Da die Flussraten eine bezugsabhängige Größe darstellen, können diese in Abhängigkeit der Aggregatgröße auch größer sein.

Wie bereits vorhergehend erläutert, wird die flüssige Schmelzphase durch die Anordnung des zumindest einen Injektors in einem spezifischen Winkel zur Horizontalen in Rotation versetzt, so dass sich ein Vortex innerhalb der Haupt- als auch der Nebenreaktionszone ausbildet. Um einen besonders effizienten Vortex in der flüssigen Schlackenphase, auch einen, der sich in Bezug auf die Zugabe der zerkleinerten metallhaltigen Rohstoffe, Reststoffe und/oder Sekundärreststoffe vorteilhaft auswirkt, zu erzielen, ist bevorzugt vorgesehen, dass das Reaktionsgas über den zumindest einen Injektor tangential in Bezug auf einen imaginären Strömungsring in die Schlackenphase eingeblasen wird, wobei der Strömungsring einen Durchmesser umfasst, der dem 0.1 bis 0.9-fachen des inneren Durchmessers, mehr bevorzugt dem 0.1 bis 0.8-fachen des inneren Durchmessers, noch mehr bevorzugt dem 0.2 bis 0.7-fachen des inneren Durchmessers, und am meisten bevorzugt dem 0.2 bis 0.6-fachen des inneren Durchmessers der Hauptreaktionszone entspricht. Vorteilhafterweise hat sich gezeigt, dass bei einer spezifischen Umdrehungsgeschwindigkeit der flüssigen Schlackenphase eine Trombe im Zentrum dieser ausbildbar ist, über den die zerkleinerten metallhaltigen Rohstoffe, Reststoffe und/oder Sekundärreststoffe direkt in die flüssige Schmelzphase einbringbar sind und/oder zumindest direkt von der flüssigen Schlackenphase aufgenommen und somit in dem Prozess wesentlich schneller zersetzt werden können. Im Unterschied zu den aus dem Stand der Technik bekannten Prozessen findet der Zersetzungsprozess in der gewünschten Hauptreaktionszone bzw. in der flüssigen Schlackenphase statt und nicht an ihrer Oberfläche.

In einer besonders vorteilhaften Ausführungsvariante ist daher vorgesehen, dass die metallhaltigen Rohstoffe, Reststoffe und/oder Sekundärreststoffe durch eine oberhalb der flüssigen Schlackenphase angeordnete Öffnung des Einschmelzaggregats gezielt in das Zentrum der Schlackenphase aufgegeben werden.

Besonders vorteilhaft wirkt sich der zuvor beschriebene Effekt aus, wenn das Reaktionsgas über zumindest zwei, mehr bevorzugt über zumindest drei, noch mehr bevorzugt über zumindest vier, und am meisten bevorzugt über zumindest fünf in einer Wandung des Einschmelzaggregats angeordnete Injektoren in die flüssige Schlackenphase eingeblasen wird, wobei die Mehrzahl der Injektoren besonders bevorzugt in einem gleichen Abstand entlang des Umfangs des Einschmelzaggregats angeordnet sind.

Zusätzlich und/oder alternativ können die zerkleinerten und/oder ggf. pulverförmigen metallhaltigen Rohstoffe, Reststoffe und/oder Sekundärreststoffe über zumindest eine, vorzugsweise über zumindest zwei, mehr bevorzugt über zumindest drei, Injektionslanze(n), die im Bereich des zumindest einen Injektors angeordnet ist, der flüssigen Schlackenphase zugegeben werden. Über die zumindest eine, vorteilhafterweise mehreren, Injektionslanze kann das zerkleinerte und/oder ggf. pulverförmige Material direkt in die flüssige Schlackenphase, mehr bevorzugt direkt in die von dem zumindest einem Injektor erzeugte Kavitation innerhalb der flüssigen Schlackenphase eingeblasen werden, und/oder direkt in den Gasstrahl des Injektors geblasen werden, wodurch die zerkleinerten und/oder ggf. pulverförmigen metallhaltigen Rohstoffe, Reststoffe und/oder Sekundärreststoffe sodann in die flüssige Schlackenphase gelangen. Somit können diese mit minimalen Verlusten effektiv umgesetzt werden. Eine besonders effektive Umsetzung wird erzielt, wenn das Material eine mittlere Partikelgröße von 0.01 bis 5.0 mm, bevorzugt eine mittlere Partikelgröße von kleiner 3.5 mm, mehr bevorzugt eine mittlere Partikelgröße von kleiner 3.0 mm aufweist.

In einer weiteren bevorzugten Ausführungsvariante kann das über den zumindest einen Injektor in die Schlackenphase eingeblasene, Reaktionsgas gepulst werden.

Das erfindungsgemäße Verfahren ist grundsätzlich zum pyrometallurgischen Einschmelzen von metallhaltigen Rohstoffen, Reststoffen und/oder Sekundärreststoffen vorgesehen. Im speziellen handelt es sich hierbei um antimon-, bismut-, blei-, eisen-, gallium-, gold-, indium-, kupfer-, nickel-, palladium-, platin-, rhodium-, ruthenium-, silber-, zink- und/oder zinnhaltige Roh-, Rest- und/oder Sekundärreststoffe, wie insbesondere organikhaltige Schrotte.

Als organikhaltiger Schrott wird im Sinne der vorliegenden Erfindung jeglicher Schrott verstanden, der eine organische Komponente umfasst. Bevorzugte organikhaltige Schrotte sind ausgewählt aus der Reihe umfassend Elektroschrotte, Autoschredderschrotte und/oder Transformatorenschredderschrotte, insbesondere Schredderleichtfraktionen.

Unter dem Begriff "Elektroschrott" werden im Sinne der vorliegenden Erfindung elektronische Altgeräte verstanden, die entsprechend der EU-Richtlinie 2002/96/EG definiert sind. Von dieser Richtlinie erfasste Gerätekategorien betreffen Haushaltsgroßgeräte; Haushaltskleingeräte; IT- und Telekommunikationsgeräte; Geräte der Unterhaltungselektronik; Beleuchtungskörper; elektrische und elektronische Werkzeuge (mit Ausnahme ortsfester industrieller Großwerkzeuge); elektrische Spielzeuge sowie Sport- und Freizeitgeräte; medizinische Geräte (mit Ausnahme aller implantierten und infizierten Produkte); Überwachungs- und Kontrollinstrumente; sowie automatische Ausgabegeräte. Hinsichtlich der einzelnen Produkte, die in die entsprechenden Gerätekategorie fallen wird auf den Anhang IB der Richtlinie verwiesen.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Figur 1: eine Ausführungsvariante eines erfindungsgemäßen Einschmelzaggregats in einer schematischen Schnittdarstellung zur Durchführung des erfindungsgemäßen Verfahrens, und
- Figur 2: eine Darstellung des Einschmelzaggregats gemäß Schnittlinie A-A.

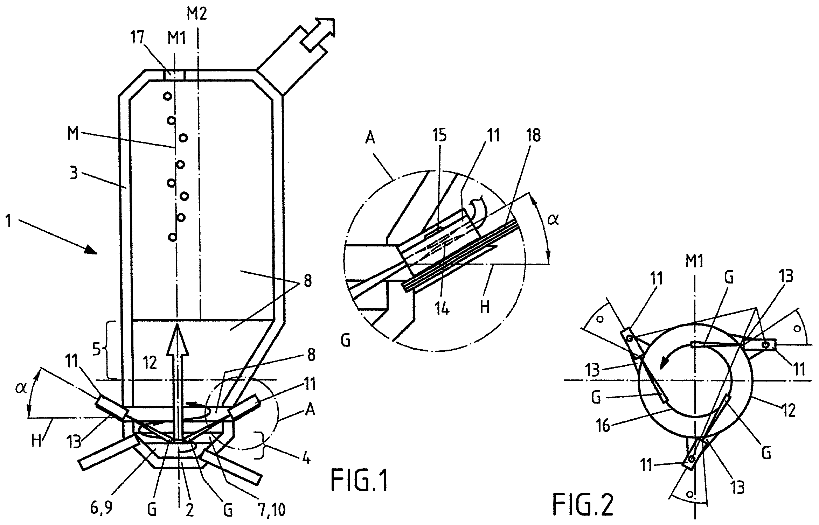

In Figur 1 ist eine Ausführungsvariante des erfindungsgemäßen Einschmelzaggregats 1 in einer schematischen Darstellung gezeigt, welches zum pyrometallurgischen Einschmelzen von metallhaltigen Rohstoffen, Reststoffen und/oder Sekundärreststoffen, nachfolgend als einzuschmelzendes Material M bezeichnet, in Anwesenheit eines oxidierenden, reduzierenden und/oder inerten Gases und/oder Gasgemisches G vorgesehen ist. Das oxidierende, reduzierende und/oder inerte Gas und/oder Gasgemisch G wird nachfolgend als Reaktionsgas G bezeichnet.

Das vorliegend gezeigte Einschmelzaggregat 1 ist in Form eines konventionellen Badschmelzaggregats ausgebildet, welches im unteren Bereich eine Grundfläche 2 sowie eine sich von der Grundfläche 2 vertikal erstreckende, im Wesentlichen zylinderförmig ausgebildete Reaktorwand 3 umfasst, die einen ersten konisch ausgebildeten Bereich 4 und einen zweiten konisch ausgebildeten Bereich 5 aufweist. Das Einschmelzaggregat 1 umfasst eine Schmelzzone 6, eine Hauptsowie eine Nebenreaktionszone 7, 8.

Der erste konische Bereich 4 des Einschmelzaggregats 1 ist derart konfiguriert, dass dieser die Schmelzzone 6 sowie die Hauptreaktionszone 7 umfasst. Oberhalb der Hauptreaktionszone 7 erstreckt sich die Nebenreaktionszone 8.

In dem ersten konischen Bereich 4 wird das zerkleinerte einzuschmelzende Material M in Gegenwart des Reaktionsgases G eingeschmolzen, so dass sich eine flüssige Schmelzphase 9 und eine flüssige Schlackenphase 10 ausbildet.

Wie anhand der Darstellung in Figur 1 erkennbar, wird das Reaktionsgas G über in der Reaktorwand 3 angeordnete Injektoren 11 in das Einschmelzaggregat 1 eingeblasen. Die Injektoren 11 sind zwischen dem ersten konischen Bereich 4 sowie dem zweiten konischen Bereich 5 in einem Ringelement 12 angeordnet, welcher spezifisch ausgebildete und wassergekühlte Ports 13 umfasst, in denen die Injektoren 11 entsprechend positioniert sind.

Das Reaktionsgas G wird in der vorliegend gezeigten Ausführungsvariante über die in dem Einschmelzaggregat 1 oberhalb der flüssigen Schlackenphase 10 bzw. in der Nebenreaktionszone 8 angeordnete Injektoren 11 in die Schlackenphase 10 eingeblasen. Die Injektoren 11 sind, wie dies anhand der Darstellung erkennbar, in einem spezifischen Winkel ausgerichtet und oberhalb der flüssigen Schlackenphase 10 angeordnet. Der Winkel kann beispielsweise im Bereich von 5° bis 85° bezogen auf die Horizontale H liegen.

Jeder der Injektoren 11 weist jeweils eine Lavaldüse 14 auf, über die das Reaktionsgas G in die Schlackenphase 10 mit Überschallgeschwindigkeit eingeblasen werden kann. Ferner wird das Reaktionsgas G über die Injektoren 11, die vorzugsweise jeweils eine Lavaldüse 14 umfassen, komprimiert in das Einschmelzaggregat 1 zugeführt und innerhalb des Einschmelzaggregats 1 adiabatisch expandiert und sodann als adiabatisch expandiertes Reaktionsgas in die flüssige Schlackenphase 10 eingeblasen, besonders bevorzugt derart, dass in einem stark exotherm verlaufenden Reaktionsprozess eine an den Prozess angepasste Wärmemenge entzogen werden kann.

Außenseitig umfasst weiterhin jeder der Injektoren 11 eine Koaxialdüse 15, über die ein Hüllgas (nicht dargestellt) auf die flüssige Schlackenphase 10 aufgeblasen werden kann.

In Figur 2 ist eine Darstellung des Einschmelzaggregats 1 gemäß Schnittlinie A-A gezeigt. Erkennbar sind hierbei insbesondere die drei im gleichen Abstand zueinander angeordneten Injektoren 11, über die das Reaktionsgas G tangential in Bezug auf einen imaginären Strömungsring 16 in die flüssige Schlackenphase 10 eingeblasen wird, wobei der Strömungsring 16 einen Durchmesser umfassen kann, der dem 0.1 bis 0.9-fachen des inneren Durchmessers der Hauptreaktionszone 7 entspricht.

Das einzuschmelzende Material M kann durch eine oberhalb der Schlackenphase 10 angeordnete Öffnung 17 des Einschmelzaggregats 1 in das Zentrum dieser aufgegeben werden. Zusätzlich oder alternativ kann dieses auch über eine Injektionslanze 18, die im Bereich des Injektors 11 angeordnet ist, der flüssigen Schlackenphase 10 zugegeben werden.

### Bezugszeichenliste

- 1: Einschmelzaggregat
- 2: Grundfläche
- 3: Reaktorwand
- 4: erster konischer Bereich
- 5: zweiter konischer Bereich
- 6: Schmelzzone
- 7: Hauptreaktionszone
- 8: Nebenreaktionszone
- 9: Schmelzphase
- 10: Schlackenphase
- 11: Injektor
- 12: Ringelement
- 13: Ports
- 14: Lavaldüse
- 15: Koaxialdüse
- 16: Imaginärer Strömungsring
- 17: Öffnung / Beschickungssystem
- 18: Injektionslanze
- M: einzuschmelzende Material
- H: Horizontale
- G: Reaktionsgas

## Patentansprüche

1. Verfahren zum pyrometallurgischen Einschmelzen von metallhaltigen Rohstoffen, Reststoffen und/oder Sekundärreststoffen (M), wobei diese in zerkleinerter Form einem Einschmelzaggregat (1), das eine Schmelzzone (6), eine Haupt- sowie eine Nebenreaktionszone (7, 8) umfasst, zugeführt und in Gegenwart eines oxidierenden, reduzierenden und/oder inerten Gases und/oder Gasgemisches (G) eingeschmolzen werden, so dass eine flüssige Schmelzphase (9), eine flüssige Schlackenphase (10) sowie eine Gasphase gebildet wird,
**dadurch gekennzeichnet, dass**
das oxidierende, reduzierende und/oder inerte Gas und/oder Gasgemisch (G) einen positiven Joule-Thompson-Koeffizienten (µ) aufweist, wobei das reduzierende Gas und/oder Gasgemisch ausgewählt ist aus der Reihe umfassend Erdgas, insbesondere Methan, Kohlenmonoxid, Wasserdampf, und/oder Gasmischungen hiervon, und über zumindest einen Injektor (11) komprimiert zugeführt und innerhalb des Einschmelzaggregats (1) adiabatisch expandiert und sodann als adiabatisch expandiertes Gas und/oder Gasgemisch in die flüssige Schlackenphase (10) eingeblasen wird, derart, dass eine Kühlwirkung im Bereich von mindestens 10 J/Nm³ und maximal 100 kJ/Nm³ erzielt wird.

2. Verfahren nach Anspruch 1, wobei der zumindest eine Injektor (11) eine Lavaldüse (14) umfasst, über die das oxidierende, reduzierende und/oder inerte Gas und/oder Gasgemisch (G) in die flüssige Schlackenphase (10) eingeblasen wird, und vorzugsweise zusätzlich eine Koaxialdüse (15) umfasst, über die ein zweites oxidierendes, reduzierendes und/oder inertes Gas- und/oder Gasgemisch (G) auf die flüssige Schlackenphase (10) aufgeblasen wird.

3. Verfahren nach Anspruch 1 oder 2, wobei das oxidierende, reduzierende und/oder inerte Gas und/oder Gasgemisch (G) über zumindest einen in dem Einschmelzaggregat (1) oberhalb der flüssigen Schlackenphase (10) und berührungslos zur dieser angeordneten sowie in einem Winkel von 5 bis 85° bezogen auf die Horizontale ausgerichteten Injektor (11) in die flüssige Schlackenphase (10) eingeblasen wird.

4. Verfahren nach Anspruch 3, wobei der zumindest eine Injektor (11), über den das oxidierende, reduzierende und/oder inerte Gas und/oder Gasgemisch (G) berührungslos in die flüssige Schlackenphase (10) eingeblasen wird, einen Mindestabstand von 0.10 m, bevorzugt einen Mindestabstand von 0.15 m, mehr bevorzugt einen Mindestabstand von 0.20 m, noch mehr bevorzugt einen Mindestabstand von 0.25 m, und am meisten bevorzugt einen Mindestabstand von 0.30 m zur Oberfläche der Schlackenphase (10) aufweist.

5. Verfahren nach einem der vorhergehenden Ansprüche, wobei das oxidierende Gas und/oder Gasgemisch (G) ausgewählt ist aus der Reihe umfassend Sauerstoff, Luft und/oder sauerstoffangereicherte Luft; und das inerte Gas und/oder Gasgemisch ausgewählt ist aus der Reihe umfassend Stickstoff, Argon, Kohlendioxid und/oder Gasmischungen hiervon.

6. Verfahren nach einem der vorhergehenden Ansprüche, wobei das über den zumindest einen Injektor (11) in die flüssige Schlackenphase (10) eingeblasene oxidierende, reduzierende und/oder inerte Gas und/oder Gasgemisch (G) mit einer Geschwindigkeit von mindestens 50 m/s, bevorzugt mit einer Geschwindigkeit von mindestens 100 m/s, mehr bevorzugt mit einer Geschwindigkeit von mindestens 150 m/s, noch mehr bevorzugt mit einer Geschwindigkeit von mindestens 200 m/s, weiter bevorzugt mit einer Geschwindigkeit von mindestens 250 m/s, und am meisten bevorzugt mit einer Geschwindigkeit von mindestens 300 m/s eingeblasen wird.

7. Verfahren nach einem der vorhergehenden Ansprüche, wobei das erste oxidierende, reduzierende und/oder inerte Gas und/oder Gasgemisch (G) mit einer Flussrate von mindestens 300 Nm³/h, bevorzugt mit einer Flussrate von mindestens 350 Nm³/h, mehr bevorzugt mit einer Flussrate von mindestens 400 Nm³/h, noch mehr bevorzugt mit einer Flussrate von mindestens 450 Nm³/h, und am meisten bevorzugt mit einer Flussrate von mindestens 500 Nm³/h in die Schlackenphase (10) eingeblasen wird.

8. Verfahren nach einem der vorhergehenden Ansprüche, wobei das erste oxidierende, reduzierende und/oder inerte Gas und/oder Gasgemisch (G) über den zumindest einen Injektor (11) tangential in Bezug auf einen imaginären Strömungsring (16) in die flüssige Schlackenphase (10) eingeblasen wird, wobei der Strömungsring (16) einen Durchmesser umfasst, der dem 0.1 bis 0.9-fachen des inneren Durchmessers der Hauptreaktionszone (7) des Einschmelzaggregats (1) entspricht.

9. Verfahren nach einem der vorhergehenden Ansprüche, wobei das über den zumindest einen Injektor (11) in die flüssige Schlackenphase (10) eingeblasene erste oxidierende, reduzierende und/oder inerte Gas und/oder Gasgemisch (G) gepulst wird.

10. Verfahren nach einem der vorhergehenden Ansprüche, wobei die metallhaltigen Rohstoffe, Reststoffe und/oder Sekundärreststoffe durch eine oberhalb der flüssigen Schlackenphase (10) angeordnete Öffnung (17) in das Zentrum der flüssigen Schlackenphase (10) aufgegeben werden.

11. Verfahren nach einem der vorhergehenden Ansprüche, wobei die metallhaltigen Rohstoffe, Reststoffe und/oder Sekundärreststoffe, ggf. zusätzlich, durch zumindest eine in der Wandung (3) des Einschmelzaggregats (1) angeordnete Injektionslanze (18) in die flüssige Schlackenphase (10) eingeblasen werden.

12. Verfahren nach Anspruch 11, wobei die zumindest eine Injektionslanze (18) im Bereich des zumindest einen Injektors (11) angeordnet ist.

## Claims

1. Method for pyrometallurgical melting of raw materials, residual materials and/or secondary residual materials (M) with metal content, wherein these are fed in comminuted form to a smelting unit (1) having a melting zone (6) and a main as well as a secondary reaction zone (7, 8) and are melted in the presence of an oxidising, reducing and/or inert gas and/or gas mixture (G) so that a liquid melt phase (9), a liquid slag phase (10) and a gas phase are formed,
**characterised in that**
the oxidising, reducing and/or inert gas and/or gas mixture (G) has a positive Joule-Thompson coefficient (µ), wherein the reducing gas and/or gas mixture is or are selected from the group comprising natural gas, particularly methane, carbon monoxide, water vapour and/or gas mixtures thereof and is fed in compressed form by way of at least one injector (11) and adiabatically expanded within the smelting unit (1) and then injected as adiabatically expanded gas and/or gas mixture into the liquid slag phase (10) in such a way that a cooling effect is achieved in the range of at least 10 kJ/Nm³ and at most 100 kJ/Nm³.

2. Method according to claim 1, wherein the at least one injector (11) comprises a Laval nozzle (14) by way of which the oxidising, reducing and/or inert gas and/or gas mixture (G) is or are injected into the liquid slag phase (10) and preferably additionally comprises a coaxial nozzle (15) by way of which a second oxidising, reducing and/or inert gas and/or gas mixture (G) is or are blown onto the liquid slag phase (10).

3. Method according to claim 1 or 2, wherein the oxidising, reducing and/or inert gas and/or gas mixture (G) is or are injected into the liquid slag phase (10) by way of at least one injector (11) which is arranged in the smelting unit (1) above the liquid slag phase (10) and contactlessly with respect thereto and which is oriented at an angle of 5 to 85° referred to the horizontal.

4. Method according to claim 3, wherein the at least one injector (11) by way of which the oxidising, reducing and/or inert gas and/or gas mixture (G) is or are injected contactlessly into the liquid slag phase (10) has a minimum spacing of 0.10 m, preferably a minimum spacing of 0.15 m, more preferably a minimum spacing of 0.20 m, even more preferably a minimum spacing of 0.25 m and most preferably a minimum spacing of 0.30 m from the surface of the slag phase (10).

5. Method according to any one of the preceding claims, wherein the oxidising gas and/or gas mixture (G) is or are selected from the group comprising oxygen, air and/or oxygen-enriched air and the inert gas and/or gas mixture is or are selected from the group comprising nitrogen, argon, carbon dioxide and/or gas mixtures thereof.

6. Method according to any one of the preceding claims, wherein the oxidising, reducing and/or inert gas and/or gas mixture (G) injected by way of the at least one injector (11) into the liquid slag phase (10) is or are injected at a speed of at least 50 m/s, preferably at a speed of at least 100 m/s, more preferably at a speed of at least 150 m/s, even more preferably at a speed of at least 200 m/s, with further preference at a speed of at least 250 m/s and most preferably at a speed of at least 300 m/s.

7. Method according to any one of the preceding claims, wherein the first oxidising, reducing and/or inert gas and/or gas mixture (G) is or are injected into the slag phase (10) at a flow rate of at least 300 Nm³/h, preferably at a flow rate of at least 350 Nm³/h, more preferably at a flow rate of at least 400 Nm³/h, even more preferably at a flow rate of at least 450 Nm³/h and most preferably at a flow rate of at least 500 Nm³/h.

8. Method according to any one of the preceding claims, wherein the first oxidising, reducing and/or inert gas and/or gas mixture (G) is or are injected into the liquid slag phase (10) by way of the at least one injector (11) tangentially with respect to a notional flow ring (16), wherein the flow ring (16) has a diameter corresponding with 0.1 to 0.9 times the inner diameter of the main reaction zone (7) of the smelting unit (1).

9. Method according to any one of the preceding claims, wherein the first oxidising, reducing and/or inert gas and/or gas mixture (G) injected by way of the at least one injector (11) into the liquid slag phase (10) is or are pulsed.

10. Method according to any one of the preceding claims, wherein the raw materials, residual materials and/or secondary residual materials with metal content are delivered to the centre of the liquid slag phase (10) through an opening (17) arranged above the liquid slag phase (10).

11. Method according to any one of the preceding claims, wherein the raw materials, residual materials and/or secondary residual materials with metal content are optionally additionally injected into the liquid slag phase (10) by at least one injection lance (18) arranged in the wall (3) of the smelting unit (1).

12. Method according to claim 11, wherein the at least one injection lance (18) is arranged in the region of the at least one injector (11).

## Revendications

1. Procédé de fusion pyrométallurgique de matières premières, résidus et/ou résidus secondaires (M) contenant des métaux, ceux-ci étant amenés sous forme concassée à un appareil de fusion (1) qui comprend une zone de fusion (6), une zone de réaction principale et une zone de réaction secondaire (7, 8), et fondus en présence d'un gaz et/ou mélange gazeux (G) oxydant, réducteur et/ou inerte, de sorte qu'une phase fondue liquide (9), une phase de laitier liquide (10) ainsi qu'une phase gazeuse soient formées,
**caractérisé en ce que**
le gaz et/ou mélange gazeux (G) oxydant, réducteur et/ou inerte présente un coefficient de Joule-Thomson (µ) positif, le gaz et/ou mélange gazeux réducteur étant sélectionné dans la série comprenant le gaz naturel, en particulier le méthane, le monoxyde de carbone, la vapeur d'eau, et/ou des mélanges gazeux de ceux-ci, et amené à l'état comprimé par l'intermédiaire d'au moins un injecteur (11) et expansé de façon adiabatique à l'intérieur de l'appareil de fusion (1) puis insufflé sous forme de gaz et/ou de mélange gazeux expansé de façon adiabatique dans la phase de laitier liquide (10), de telle sorte qu'un effet de refroidissement dans la plage d'au moins 10 J/Nm³ à 100 kJ/Nm³ au maximum soit obtenu.

2. Procédé selon la revendication 1, dans lequel l'au moins un injecteur (11) comprend une tuyère de Laval (14) par l'intermédiaire de laquelle le gaz et/ou mélange gazeux (G) oxydant, réducteur et/ou inerte est insufflé dans la phase de laitier liquide (10), et comprend de préférence en outre une tuyère coaxiale (15) par l'intermédiaire de laquelle un second gaz et/ou mélange gazeux (G) oxydant, réducteur et/ou inerte est soufflé sur la phase de laitier liquide (10).

3. Procédé selon la revendication 1 ou 2, dans lequel le gaz et/ou mélange gazeux (G) oxydant, réducteur et/ou inerte est insufflé dans la phase de laitier liquide (10) par l'intermédiaire d'au moins un injecteur (11) disposé dans l'appareil de fusion (1) au-dessus de la phase de laitier liquide (10) et sans contact avec celle-ci et orienté selon un angle de 5 à 85° par rapport à l'horizontale.

4. Procédé selon la revendication 3, dans lequel l'au moins un injecteur (11), par l'intermédiaire duquel le gaz et/ou mélange gazeux (G) oxydant, réducteur et/ou inerte est insufflé sans contact dans la phase de laitier liquide (10), présente une distance minimale de 0,10 m, de préférence une distance minimale de 0,15 m, plus préférentiellement une distance minimale de 0,20 m, encore plus préférentiellement une distance minimale de 0,25 m, et de la manière la plus préférentielle une distance minimale de 0,30 m par rapport à la surface de la phase de laitier (10).

5. Procédé selon l'une des revendications précédentes, dans lequel le gaz et/ou mélange gazeux (G) oxydant est sélectionné dans la série comprenant l'oxygène, l'air et/ou l'air enrichi en oxygène ; et le gaz et/ou mélange gazeux inerte est sélectionné dans la série comprenant l'azote, l'argon, le dioxyde de carbone et/ou des mélanges gazeux de ceux-ci.

6. Procédé selon l'une des revendications précédentes, dans lequel le gaz et/ou mélange gazeux (G) oxydant, réducteur et/ou inerte insufflé dans la phase de laitier liquide (10) par l'intermédiaire de l'au moins un injecteur (11) est insufflé avec une vitesse d'au moins 50 m/s, de préférence avec une vitesse d'au moins 100 m/s, plus préférentiellement avec une vitesse d'au moins 150 m/s, encore plus préférentiellement avec une vitesse d'au moins 200 m/s, plus préférentiellement encore avec une vitesse d'au moins 250 m/s et de la manière la plus préférentielle avec une vitesse d'au moins 300 m/s.

7. Procédé selon l'une des revendications précédentes, dans lequel le premier gaz et/ou mélange gazeux (G) oxydant, réducteur et/ou inerte est insufflé dans la phase de laitier (10) avec un débit d'au moins 300 Nm³/h, de préférence avec un débit d'au moins 350 Nm³/h, plus préférentiellement avec un débit d'au moins 400 Nm³/h, encore plus préférentiellement avec un débit d'au moins 450 Nm³/h, et de la manière la plus préférentielle avec un débit d'au moins 500 Nm³/h.

8. Procédé selon l'une des revendications précédentes, dans lequel le premier gaz et/ou mélange gazeux (G) oxydant, réducteur et/ou inerte est insufflé tangentiellement par l'intermédiaire de l'au moins un injecteur (11) par rapport à un anneau d'écoulement (16) imaginaire dans la phase de laitier liquide (10), l'anneau d'écoulement (16) comprenant un diamètre qui correspond à 0,1 à 0,9 fois le diamètre intérieur de la zone de réaction principale (7) de l'appareil de fusion (1).

9. Procédé selon l'une des revendications précédentes, dans lequel le premier gaz et/ou mélange gazeux (G) oxydant, réducteur et/ou inerte insufflé dans la phase de laitier liquide (10) par l'intermédiaire de l'au moins un injecteur (11) est pulsé.

10. Procédé selon l'une des revendications précédentes, dans lequel les matières premières, résidus et/ou résidus secondaires contenant des métaux sont introduits au centre de la phase de laitier liquide (10) à travers une ouverture (17) disposée au-dessus de la phase de laitier liquide (10).

11. Procédé selon l'une des revendications précédentes, dans lequel les matières premières, résidus et/ou résidus secondaires contenant des métaux, éventuellement en supplément, sont insufflés dans la phase de laitier liquide (10) par l'intermédiaire d'au moins une lance d'injection (18) disposée dans la paroi (3) de l'appareil de fusion (1).

12. Procédé selon la revendication 11, dans lequel l'au moins une lance d'injection (18) est disposée dans la zone de l'au moins un injecteur (11).
